Europäisches Patentamt

**European Patent Office**

Office européen des brevets

(11) Numéro de publication: **0 157 700**
**A1**

## DEMANDE DE BREVET EUROPEEN

(21) Numero de dépôt: **85400597.2**

(22) Date de dépôt: **27.03.85**

(51) Int. Cl.⁴: **F 41 F 5/02**, F 16 G 11/10, F 16 G 11/04

(30) Priorité: **04.04.84 FR 8405298**

(43) Date de publication de la demande: **09.10.85**
**Bulletin 85/41**

(84) Etats contractants désignés: **BE CH DE FR GB IT LI**

(71) Demandeur: **S.A. RAFAUT, 13, avenue Marcelin Berthelot, F-92390 Villeneuve-la-Garenne (FR)**

(72) Inventeur: **Billot, Jean, 40, rue Léon Mignotte, F-91570 Bievres (FR)**

(74) Mandataire: **Schrimpf, Robert et al, Cabinet Regimbeau 26, Avenue Kléber, F-75116 Paris (FR)**

(54) **Dispositif de sécurité pour empêcher l'armement d'une charge aéroportée.**

(57) Dispositif de sécurité pour empêcher l'armement d'une charge (1) aéroportée avant le largage de cette dernière, ledit armement étant provoqué par une traction d'un câble de tirage (4) de l'aéronef sur un câble d'armement (3) lié à la charge. Ce dispositif comporte une pince (2) traversée librement par le câble d'armement (3) lorsqu'elle est ouverte et pincée sur le câble d'armement (3) lorsqu'elle est fermée, ladite pince (2) comprenant deux pièces à déplacer l'une par rapport à l'autre selon la direction (T) de traction du câble de tirage pour provoquer la fermeture de la pince, l'une des pièces ou pièce de fixation (5) étant fixée à la charge par un moyen de fixation (6a, 6b) sensible à la traction selon ladite direction (T) et l'autre pièce ou pièce de traction (7) étant montée à coulisse dans la charge selon ladite direction (T) et fixée au câble de tirage (4).

Application aux mécanismes de commande assurant l'armement d'engins largables.

## DISPOSITIF DE SECURITE POUR EMPECHER L'ARMEMENT D'UNE CHARGE AEROPORTEE.

La présente invention concerne un dispositif de sécurité pour empêcher l'armement d'une charge largable aéroportée avant le largage de ce dernier, d'une part, et après largage d'autre part, si la charge est larguée inerte.

La plupart des charges largables telles que notamment les bombes sont équipées d'un certain nombre de systèmes de commande (fusée de mise à feu, éoliennes, parachute de freinage) qu'il s'agit de déclencher avec un certain retard pour des raisons essentiellement de sécurité lors du largage de l'engin.

De nombreux mécanismes de commande ont précédemment été décrits dans la littérature, lesdits mécanismes de commande assurant l'armement de l'engin, lors du largage, par tirage d'une longueur déterminée d'un câble de tirage relié à l'aéronef transporteur, ledit câble de tirage étant à son autre extrémité relié au câble d'armement. La Demanderesse a, en particulier, décrit dans le brevet français n° 73 06 671 du 26 Février 1973, un mécanisme de commande de déclenchement à traction mécanique pour engin largable.

La présente invention a pour objet de proposer un nouveau dispositif pour empêcher l'armement d'un engin largable aéroporté avant le largage de ce dernier, et pour permettre, si on le désire, le largage inerte, c'est-à-dire sans armement de la charge, ledit dispositif de sécurité étant destiné à être associé avec un mécanisme défini ci-dessus de manière à assurer de façon certaine un déclenchement effectif du système uniquement lors du largage de l'engin équipé du mécanisme de commande et du dispositif de sécurité.

A cette fin, le dispositif de sécurité de l'invention est caractérisé en ce qu'il comporte une pince traversée librement par le câble d'armement lorsqu'elle est ouverte et pincée sur le câble d'armement lorsqu'elle est fermée, ladite pince comprenant deux

pièces à déplacer l'une par rapport à l'autre selon la direction de traction du câble de tirage pour provoquer la fermeture de la pince, l'une des pièces ou pièce de fixation étant fixée à la bombe par un moyen de fixation sensible à la traction selon ladite direction et l'autre pièce ou pièce de traction étant montée à coulisse dans la bombe selon ladite direction et fixée au câble de tirage, en sorte que la traction du câble de tirage provoque d'abord le déplacement de la pièce de traction selon ladite direction jusqu'à la fermeture de la pince si le déplacement est suffisant puis agit sur le moyen de fixation, si la force de traction dépasse un seuil choisi, pour supprimer cette fixation et autoriser ensuite la traction du câble d'armement par le câble de tirage.

Selon une disposition préférée, ladite pièce de fixation comporte un corps tubulaire fixé à la bombe, et pourvu d'au moins deux mâchoires s'étendant généralement axialement depuis une extrémité du corps, en parties divergentes puis en parties convergentes, ledit câble d'armement traversant le corps tubulaire et passant entre les mâchoires, lesdites parties convergentes des mâchoires étant aptes après déformation à venir serrer le câble d'armement, ladite déformation étant produite par un resserrement des parties divergentes dû à un déplacement de l'élément de traction provoqué par une traction du câble de tirage. Ledit moyen de fixation peut être avantageusement assuré par une goupille de cisaillement.

D'autres caractéristiques et avantages de l'invention apparaîtront au cours de la description qui va suivre et sur les dessins annexés auxquels elle fait référence.

0157700

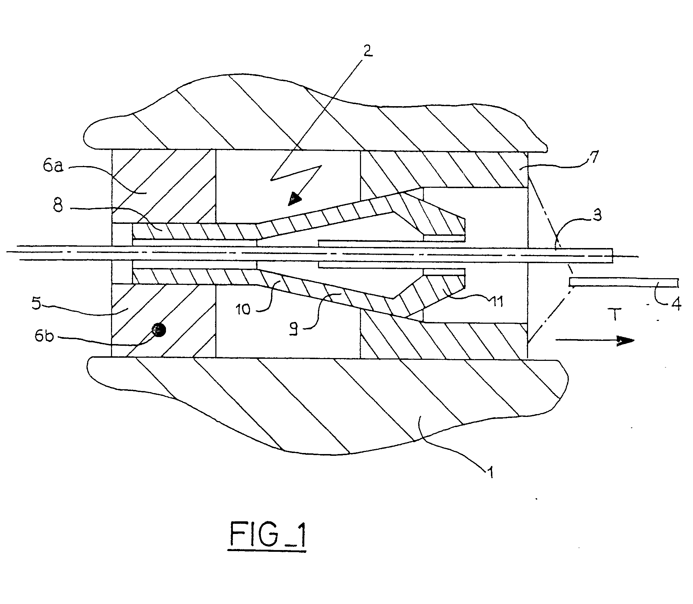

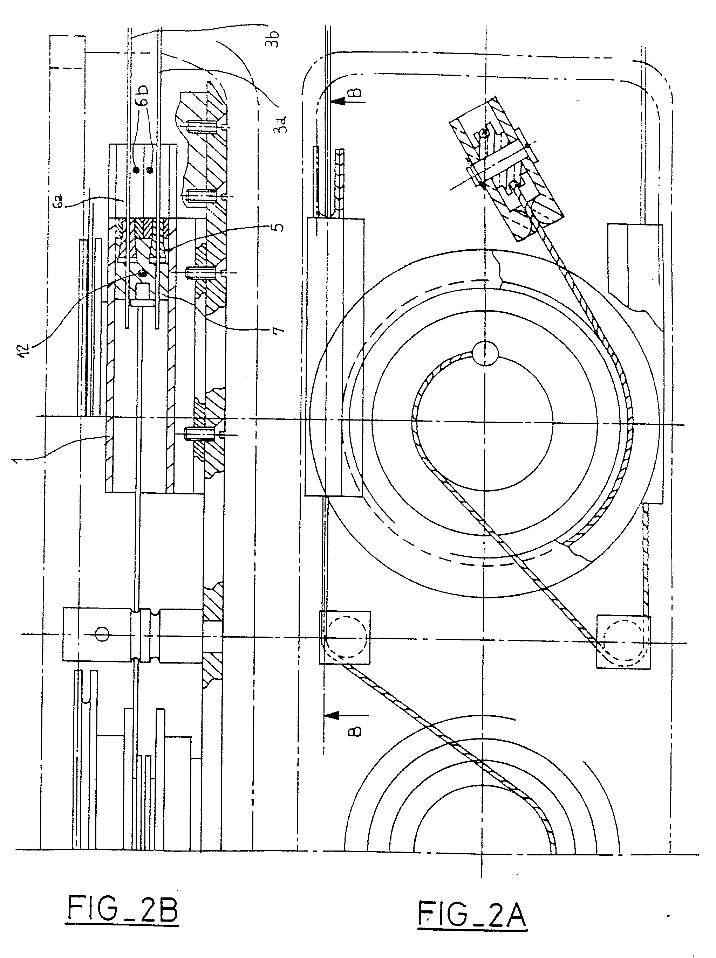

Sur ces dessins, la figure 1 représente un dispositif de sécurité selon l'invention, les figures 2A et 2B illustrent une association mécanisme de commande - dispositif de sécurité dans un mode de réalisation préféré ; sur toutes les figures, les mêmes références désignent les mêmes éléments. Plus précisément :
- la figure 1 est une vue en coupe longitudinale du dispositif de sécurité selon l'invention,
- la figure 2A est une vue de dessus du mécanisme de commande et du dispositif de sécurité selon l'invention,
- la figure 2B est une vue en coupe, suivant le plan B-B de la figure 2A, du mécanisme de commande et du dispositif de sécurité selon l'invention.

Comme le montre la figure 1, le dispositif de sécurité pour empêcher l'armement d'une charge 1 aéroportée avant le largage de cette dernière, ledit armement étant provoqué par une traction d'un câble de tirage 4 sur un câble d'armement 3, comporte essentiellement une pince 2.

La pince 2 est traversée librement par le câble d'armement 3 lorsqu'elle est ouverte et pincée sur le câble d'armement 3 lorsqu'elle est fermée. De plus, elle comporte deux pièces à déplacer l'une par rapport à l'autre selon la direction T de traction du câble de tirage 4 afin de provoquer la fermeture de la pince.

L'une des pièces ou pièce de fixation 5 est fixée à la charge 1 par un moyen de fixation (6a, 6b) sensible à la traction selon ladite direction T, tandis que l'autre pièce ou pièce de traction 7 est montée à coulisse dans la charge 1 selon ladite direction T et est fixée au câble de tirage.

Dans un mode de réalisation particulier, ladite pièce de fixation 5 comporte essentiellement un corps tubulaire 8, au moins deux mâchoires 9 et un organe de fixation 6a et 6b.

Le corps tubulaire 8 s'étend axialement autour du câble d'armement 3 et est solidaire de la charge 1 par l'intermédiaire de l'organe de fixation 6a et 6b.

Les mâchoires 9 s'étendent généralement axialement depuis une extrémité du corps tubulaire 8 en parties divergentes 10 puis en parties convergentes 11, lesdites mâchoires étant aptes après déformation à venir serrer le câble d'armement 3, ladite déformation étant produite par un resserrement des parties divergentes 10 dû à un déplacement de la pièce de traction 7 dans la direction T provoqué par la traction du câble de tirage 4.

L'organe de fixation se compose d'un manchon 6a solidaire du corps tubulaire 8 et d'une goupille de cisaillement 6b reliant ledit manchon 6a à la charge 1. Ladite goupille de cisaillement 6b déterminant la valeur limite de traction du câble de tirage 4.

La pièce de traction 7 est également un manchon, monté à coulisse dans la charge, ladite pièce de traction solidaire du câble de tirage 4 étant apte à coopérer avec les parties divergentes 10 des mâchoires 9 pour provoquer la fermeture de la pince 2.

Dans un exemple typique, ladite pièce de traction 7 comporte un alésage conique susceptible de coopérer avec le contour extérieur des parties divergentes 10 des mâchoires 9.

Comme le montrent les figures 2A et 2B, le dispositif de sécurité est destiné à être associé à un mécanisme de commande de déclenchement à traction mécanique pour charge largable, ledit mécanisme de commande comportant essentiellement un câble de traction relié à l'aéronef transporteur et une poulie d'emmagasinage conçue pour actionner en fin de déroulement une transmission de commande contrôlant le déclenchement du système.

Dans l'exemple représenté, le dispositif de sécurité est doublé pour assurer la traction de deux câbles d'armement 3a et 3b par un seul câble de tirage 4.

De plus, la pièce de traction 7 est positionnée dans la bombe par une goupille de cisaillement 12, ladite goupille 12 étant de résistance inférieure à celle des goupilles 6b de la pièce de fixation 5.

Bien entendu, la présente invention n'est pas limitée au mode de réalisation représenté, et s'étend à toute variante conforme à son esprit.

En particulier, la structure de la pince 2 n'est pas limitative, cette structure n'étant donnée qu'à titre d'exemple. D'autres structures, telles celles comportant une pièce de fixation 5 femelle et une pièce de traction mâle coopérant pour former la pince 2, peuvent avantageusement remplacer la structure décrite ci-dessus.

0157700

.REVENDICATIONS

1. - Dispositif de sécurité pour empêcher l'armement d'une charge (1) aéroportée avant le largage de cette dernière et pour permettre, si on le désire, le largage inerte, c'est-à-dire sans armement de la charge (1), ledit armement étant provoqué par une traction d'un câble de tirage (4) lié à l'aéronef sur un câble d'armement (3) lié à la charge, caractérisé en ce qu'il comporte une pince (2) traversée librement par le câble d'armement (3) lorsqu'elle est ouverte et pincée sur le câble d'armement (3) lorsqu'elle est fermée, ladite pince (2) comprenant deux pièces à déplacer l'une par rapport à l'autre selon la direction (T) de traction du câble de tirage pour provoquer la fermeture de la pince, l'une des pièces ou pièce de fixation (5) étant fixée à la bombe par un moyen de fixation (6a, 6b) sensible à la traction selon ladite direction (T) et l'autre pièce ou pièce de traction (7) étant montée à coulisse dans la charge selon ladite direction (T) et fixée au câble de tirage (4), en sorte que la traction du câble de tirage (4) provoque d'abord le déplacement de la pièce de traction (7) selon ladite direction (T) jusqu'à la fermeture de la pince (2) si le déplacement est suffisant puis agit sur le moyen de fixation (6a, 6b), si la force de traction dépasse un seuil choisi, pour supprimer cette fixation (6a, 6b) et autoriser ensuite la traction du câble d'armement (3) par le câble de tirage (4).

2. - Dispositif selon la revendication 1, caractérisé en ce que ladite pièce de fixation (5) comporte un corps tubulaire (8) fixé à la charge (1), et pourvu d'au moins deux mâchoires (9) s'étendant généralement axialement depuis une extrémité du corps, en parties divergentes (10) puis en parties convergentes (11), ledit câble d'armement (3) traversant le corps tubulaire (8) et passant entre les mâchoires (9), lesdites parties convergentes (11) des mâchoires (9) étant aptes après déformation à venir serrer le câble d'armement (3), ladite déformation étant produite par un resserrement des parties divergentes (10) dû à un déplacement de l'élément de traction (7) provoqué par une traction du câble de tirage (4).

3. Dispositif selon la revendication 2, caractérisé en ce que ledit moyen de fixation (6b) est une goupille de cisaillement.

4. Dispositif selon l'une des revendications 2 ou 3, caractérisé en ce que ladite pièce de traction (7) est un manchon apte à coopérer avec les parties divergentes (10) des mâchoires (9).

5. Dispositif selon la revendication 4, caractérisé en ce que ledit manchon (7) comporte un alésage conique susceptible de coopérer avec le contour extérieur des parties divergentes (10) des mâchoires (9).

FIG_1

0157700

FIG_2B          FIG_2A

# RAPPORT DE RECHERCHE EUROPEENNE

Office européen des brevets

0157700
Numéro de la demande

EP 85 40 0597

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int Cl.4) |
|---|---|---|---|
| Y | US-A-3 595 126 (NORTON) <br><br> * En entier * | 1,2,4, 5 | F 41 F 5/02 <br> F 16 G 11/10 <br> F 16 G 11/04 |
| | --- | | |
| Y | CH-A- 188 941 (WEBER) <br><br> * En entier * | 1,2,4, 5 | |
| | --- | | |
| A | US-A-3 378 892 (VANO) | | |
| | ----- | | |

| | |
|---|---|
| | **DOMAINES TECHNIQUES RECHERCHES (Int. Cl.4)** <br><br> F 42 B <br> F 42 C <br> B 64 D <br> F 41 F <br> F 16 G |

Le present rapport de recherche a été établi pour toutes les revendications

| Lieu de la recherche | Date d'achèvement de la recherche | Examinateur |
|---|---|---|
| LA HAYE | 03-06-1985 | VAN DER PLAS J.M. |